(19) Europäisches Patentamt
European Patent Office
Office européen des brevets

(11) Veröffentlichungsnummer: **0 322 781 B1**

(12) # EUROPÄISCHE PATENTSCHRIFT

(45) Veröffentlichungstag der Patentschrift: **01.03.95**

(51) Int. Cl.[6]: **C08G 65/32**, C07C 43/11

(21) Anmeldenummer: **88121574.3**

(22) Anmeldetag: **23.12.88**

Die Akte enthält technische Angaben, die nach dem Eingang der Anmeldung eingereicht wurden und die nicht in dieser Patentschrift enthalten sind.

(54) **Verwendung engruppenverschlossener Polyglycolether.**

(30) Priorität: **30.12.87 DE 3744525**

(43) Veröffentlichungstag der Anmeldung:
**05.07.89 Patentblatt 89/27**

(45) Bekanntmachung des Hinweises auf die Patenterteilung:
**01.03.95 Patentblatt 95/09**

(84) Benannte Vertragsstaaten:
**AT BE CH DE ES FR GB IT LI NL SE**

(56) Entgegenhaltungen:
**DE-A- 2 800 710**
**DE-A- 3 416 289**
**DE-C- 3 744 525**
**US-A- 3 959 391**
**US-A- 4 587 365**

(73) Patentinhaber: **Henkel Kommanditgesellschaft auf Aktien**

**D-40191 Düsseldorf (DE)**

(72) Erfinder: **Schenker, Gilbert, Dr.**
**Hermann-Hesse-Strasse 5**
**D-4006 Erkrath 2 (DE)**
Erfinder: **Piorr, Robert, Dr.**
**Kieselei 12**
**D-4030 Ratingen-Hösel (DE)**
Erfinder: **Seemann, Horst**
**Im Wingert 12**
**D-5450 Neuwied 23 (DE)**
Erfinder: **Schmid, Karl-Heinz, Dr.**
**Stifterstrasse 10**
**D-4020 Mettmann (DE)**

**EP 0 322 781 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung endgruppenverschlossener Polyglykolether, die nach einem verbesserten Verfahren erhältlich sind, als schaumdrückende Zusätze in schaumarmen Reinigungsmitteln Die DE-PS 28 00 710 beschreibt ein Verfahren zur Herstellung von veretherten Polyoxyalkylenderivaten, die dadurch hergestellt werden, daß man Polyoxyalkylenalkohole mit organischen Halogeniden in Gegenwart einer wäßrigen Losung von Natriumhydroxid oder Kaliumhydroxid mit einer Anfangs-Allakimetallhydroxidkonzentration von wenigstens 30 Gew.-% umsetzt. Ausweislich der Beispiele der DE-PS 28 00 710 wird ein nur gering gefärbtes oder praktisch farbloses Produkt dann erhalten, wenn das Rohmaterial, d.h. die Polyoxyalkylenverbindung, die mit Wasserstoff unter den dort genannten Bedingungen in Gegenwart des Hydrierkatalysators vorbehandelt worden ist, für die erfindungsgemäße Veretherungsreaktion eingesetzt wird, oder die Veretherungsreaktion in Gegenwart eines anorganischen Reduktionsmittels durchgeführt wird. Darüberhinaus konnte gezeigt werden, daß das Verfahren nur dann zu wirtschaftlich befriedigenden Ausbeuten führt, wenn Alkylhalogenid und Alkalimetallhydroxid in hohen Überschüssen zum Einsatz kommen.

Aus der Deutschen Patentanmeldung **DE-A 34 16 289** ist ein Verfahren zur Herstellung von endgruppenverschlossenen Polyoxyalkylenverbindungen bekannt, bei dem die Polyoxyalkylenverbindungen und die Halogenide im Verhältnis 1,05 bis 10 Mol, insbesondere 1,1 bis 2 Mol, und die Polyoxyalkylenverbindungen und die Alkalimetallhydroxide im Verhältnis 1 bis 4 Mol, vorzugsweise 1 bis 2 Mol eingesetzt werden.

Demgegenüber bestand die Aufgabe der vorliegenden Erfindung darin, endgruppenverschlossene Polyglykolether nach einem verbessertem Verfahren, das unter Einsatz von möglichst geringen Mengen an Alkalimetallhydroxid und organischem Halogenid verläuft, zur Verfügung zu stellen, die zudem verbesserte Antischaumeigenschaften aufweisen. Überraschenderweise wurde gefunden, daß sich endgruppenverschlossene Polyglykolether durch Umsetzung von Alkoholethoxylaten mit sehr geringen molaren Überschüssen an organischen Chloriden oder Bromiden einerseits und ebenso geringen molaren Überschüssen an festem Alkalihydroxid andererseits bei mäßigen Temperaturen mit hoher Ausbeute herstellen lassen, und vorteilhafte Eigenschaften als Schaumdrückende Zusätze in schaumarmen Reinigungs mitteln aufweisen.

Gegenstand der vorliegende Erfindung ist somit die Verwendung von endgruppenverschlossenen Polyglycolethern der Formel I,

$$R^1O-(CH_2CH_2O)_x(CH_2\overset{\displaystyle CH_3}{\overset{|}{C}}HO)_y-R^2 \qquad (I)$$

in der

- $R^1$ für einen geradkettigen oder verzweigten Alkylrest mit 1 bis 20 C-Atomen,
- $R^2$ für einen n-Butylrest
- x eine Zahl von 2 bis 50 und
- y eine Zahl von 0 bis 10 steht, die man dadurch erhält, indem man Polyglykolether der Formel IV

$$R^1O-(CH_2CH_2O)_x(CH_2\overset{\displaystyle CH_3}{\overset{|}{C}}HO)_yH \qquad (II)$$

in der $R^1$ x und y die oben angegebene Bedeutung haben, mit einem organischen Halogenid der Formel (III)

$R^2$ Hal (III)

in der $R^2$ die oben angegebene Bedeutung hat und Hal für ein Chlor- oder Bromatom steht, in Gegenwart von 80 bis 100 gew.-%igem festem, in Partikelform vorliegendem Alkalimetallhydroxid bei einem molaren Verhältnis von organischem Halogenid (III) zu Polyglykolether (II) von 1,5 : 1 bis 2,0: 1 und einem molaren Verhältnis von Alkalimetallhydroxid zu Polyglykolether (II) von 1,5 : 1 bis 2,0: 1 bei Temperaturen 60 bis

140 °C umsetzt, als schaumdrückende Zusätze in schaumarmen Reinigungsmitteln.

Mit Hilfe der vorliegenden Erfindung ist es möglich, gering gefärbte oder praktisch farblose Produkte mit verbesserten Antischaumeigenschaften zu erhalten, ohne daß das Rohrmaterial, d.h. die Polyglykolether (II) in Gegenwart eines Hydrierkatalysators vorbehandelt werden, noch die Veretherungsreaktion in Gegenwart eines anorganischen Reduktionsmittels durchgeführt werden muß. Weiterhin kann bei der Durchführung des erfindungsgemäßen Verfahrens auf organische Lösungsmittel verzichtet werden.

Das Alkalimetallhydroxid kann in Form von Schuppen, Tabletten, Prills oder als Pulver vorliegen. Eine Ausführungsform der vorliegenden Erfindung ist dadurch gekennzeichnet, daß man als Alkalimetallhydroxid Natriumhydroxid und/oder Kaliumhydroxid verwendet.

Gemäß einer Ausführungsform der vorliegenden Erfindung werden Polyglykolether der Formel (II) für die Herstellung von endgruppenverschlossenen Polyglykolethern der Formel (I) eingesetzt, deren Glykolethergruppen lediglich von Ethylenoxid abgeleitet sind. Dies bedeutet, daß gemäß der Formel (I) y gleich Null ist. Gemäß einer weiteren bevorzugten Ausführungsform der vorliegenden Erfundung werden Polyglykolether der Formel (II) umgesetzt, in denen x für eine Zahl von 2,5 bis 20 steht, wobei y gleich Null ist.

Die bevorzugte Reaktionstemperatur zur Herstellung von endgruppenverschlossenen Polyglykolethern der Formel (I) beträgt 80 bis 120 °C.

Das Molverhältnis von organischem Halogenid (III) zu dem Polyglykolether (II) liegt im Bereich von 1,5 : 1 bis 2 : 1. Insbesondere bevorzugt wird ein Molverhältnis von organischem Halogenid (III) zu Polyglykolether (II) von 2 : 1.

Beispiel 1

In einem Dreihalskolben mit KPG-Rührer, Innenthermometer und Rückflußkühler wurden 2105 g (5,63 Mol) eines Anlagerungsproduktes von 7 Moläquivalenten Ethylenoxid an ein Fettalkoholgemisch der Kettenlänge $C_{12-18}$ und 770 g (11,25 Mol) 82 %iges, schuppenförmiges Kaliumhydroxid vorgelegt. Der Kolben wurde zweimal evakuiert und mit Stickstoff gespült. Nach Zugabe von 1042 g (11,26 Mol) n-Butylchlorid wurde das Gemisch unter Rühren auf 80 °C erwärmt und 8 Stunden bei dieser Temperatur weitergerührt. Danach wurde überschüssiges Butylchlorid bei 1 bar und einer maximalen Sumpftemperatur von 200 °C abdestilliert, wobei Stickstoff als Treibgas diente. Das Reaktionsgemisch wurde auf 60 °C abgekühlt und mit 2N-Schwefelsäure neutralisiert. Das rohe Reaktionsprodukt wurde unter Rühren mit einer seinem Volumen entsprechenden Menge Wasser versetzt und anschließend bei 50 °C stehengelassen bis Phasentrennung eintrat. Durch Abtrennen der wässrigen Phase wurde ein Produkt mit der Hydroxylzahl (OHZ) 5 erhalten.

Beispiel 2

Analog Beispiel 1 wurden 620 g (1 Mol) eines Anlagerungsproduktes von 9 Moläquivalenten Ethylenoxid an ein Fettalkoholgemisch der Kettenlänge $C_{12-18}$, 137 g (2 Mol) 82 %iges, schuppenförmiges Kaliumhydroxid und 185 g (2 Mol) n-Butylchlorid im Verlauf von 4 Stunden bei 80 °C miteinander umgesetzt. Es wurde wie in Beispiel 1 aufgearbeitet mit der Abänderung, daß überschüssiges n-Butylchlorid im Wasserstrahlvakuum und einer maximalen Sumpftemperatur von 60 °C abdestilliert wurde. Es wurde ein Produkt mit der OHZ 4.8 erhalten.

Beispiel 3

Analog Beispiel 1 und 2 wurde eine Vielzahl weiterer Mischether hergestellt, wobei in den Alkoxylaten die C-Kettenlänge der Alkoholkomponente und deren Alkoxylierungsgrad in weiten Bereichen variiert wurde. Repräsentative Beispiele sind in der Tabelle 1 zusammengefaßt. Aus dieser Tabelle sind die Ausgangsmaterialien, die Reaktionsparameter und die OHZ des jeweiligen Endproduktes ersichtlich. Das molare Verhältnis von Alkoxylat zu Alkylhalogenic zu KOH betrag jeweils 1 : 2 : 2. Zur Neutralisation der Produkte wurde neben Schwefelsäure auch Essigsäure oder Phosphorsäure eingesetzt.

In der Tabelle 1 werden folgende Abkürzungen verwendet:

FA = Fettalkoholgemisch
OA = Oxoalkoholgemisch
EO = Ethylenoxid
PO = Propylenoxid

Beispielsweise bedeutet die Kurzbezeichnung $C_{12-18}$ - FA + 2 PO + 7,5 EO ein Anlagerungsprodukt von 2 Moläquivalenten Propylenoxid und 7,5 Moläquivalenten Ethylenoxid an ein Mol eines Fettalkoholgemi-

sches der C-Kettenlänge $C_{12-18}$ und die Kurzbezeichnung $C_{12-13}$ -OA + 10 EO ein Anlagerungsprodukt von 10 Moläquivalenten Ethylenoxid an ein Mol eines Oxoalkoholgemisches der Kettenlänge $C_{12-13}$.

<u>T a b e l l e</u>

| Bsp. | Ethoxylat/ Propoxylat | Halogenid | KOH-Schuppen (%) | Reaktionszeit (h) | Temp. (°C) | OHZ des Produktes |
|---|---|---|---|---|---|---|
| 3.1 | $C_{12-18}$-FA + 9 EO | $C_4$-Cl | 90 | 8 | 80 | 4,1 |
| 3.2. | 2-Octyl-1-octanol + 11 EO | $C_4$-Cl | 90 | 8 | 80 | 7,5 |
| 3.3 | $C_{16-18}$-FA + 5 EO | $C_4$-Cl | 90 | 15 | 80 | 8,3 |
| 3.4 | $C_{12-14}$-FA + 2 PO | $C_4$-Cl | 90 | 7 | 80 | 7,0 |
| 3.5 | $C_{12-18}$-FA + 2 PO + 7,5 EO | $C_4$-Cl | 90 | 7 | 80 | 10,2 |
| 3.6 | $C_{12-13}$-OA + 10 EO | $C_4$Cl | 85 | 7 | 80 | 7,1 |
| 3.7 | $C_{9-11}$-OA + 7 EO | $C_4$-Cl | 82 | 8 | 80 | 4,8 |
| 3.8 | Oleylalkohol - 20 EO | $C_4$Cl | 85 | 8 | 110 | 5,0 |

## Patentansprüche

1. Verwendung von endgruppenverschlossenen Polyglykolethern der Formel (I),

$$R^1O-(CH_2CH_2O)_x(CH_2\overset{\overset{CH_3}{|}}{C}HO)_y-R^2 \qquad (I)$$

in der $R^1$ für einen geradkettigen oder verzweigten Alkylrest mit 1 bis 20 C-Atomen, $R^2$ für einen n-Butylrest, x für eine Zahl von 2 bis 50 und y für eine Zahl von 0 bis 10 steht, dadurch erhältlich, daß man Polyglykolether der Formel (II),

$$R^1O-(CH_2CH_2O)_x(CH_2\overset{\overset{CH_3}{|}}{C}HO)_yH \qquad (II)$$

in der $R^1$, x und y die oben angegebenen Bedeutungen haben, mit einem organischen Halogenid der Formel (III),

$R^2$-Hal (III)

in der $R^2$ die oben angegebene Bedeutung besitzt und Hal für ein Chlor- oder Bromatom steht, in Gegenwart von 80 bis 100 gew.-%igem festem, in Partikelform vorliegendem Alkylimetallhydroxid bei einem molaren Verhältnis von organischem Halogenid (III) zu Polyglykolether (II) von 1,5 : 1 bis 2,0 : 1 und einem molaren Verhältnis von Alkalimetallhydroxid zu Polyglykolether (II) von ebenfalls 1,5 : 1 bis 2,0 : 1 bei Temperaturen von 60 bis 140 °C umsetzt, als schaumdrückende Zusätze in schaumarmen Reinigungsmitteln.

## Claims

1. The use of end-capped polyglycol ethers corresponding to formula (I):

$$R^1O-(CH_2CH_2O)_x(CH_2\overset{\overset{CH_3}{|}}{C}HO)_y-R^2 \qquad (I)$$

in which $R^1$ is a linear or branched alkyl radical containing 1 to 20 carbon atoms, $R^2$ is an n-butyl radical, x is a number of 2 to 50 and y is a number of 0 to 10, obtainable by reaction of polyglycol ethers corresponding to formula (II):

$$R^1O-(CH_2CH_2O)_x(CH_2\overset{\overset{CH_3}{|}}{C}HO)_yH \qquad (II)$$

in which $R^1$, x and y are as defined above, with an organic halide corresponding to formula (III):

$R^2$-Hal (III)

in which $R^2$ is as defined above and Hal is a chlorine or bromine atom,
at temperatures of 60 to 140 °C in the presence of 80 to 100% by weight of solid particulate alkali metal hydroxide, the molar ratio of organic halide (III) to polyglycol ether (II) being 1.5:1 to 2.0:1 and the molar ratio of alkali metal hydroxide to polyglycol ether (II) being 1.5:1 to 2.0:1,
as foam-suppressing additives in low-foaming cleaning compositions.

**Revendications**

**1.** Utilisation de polyglycoléthers à groupes terminaux bloqués de formule (I)

$$R^1O-(CH_2CH_2O)_x(CH_2\overset{\displaystyle CH_3}{\overset{|}{C}}HO)_y-R^2 \quad (I) \qquad (I)$$

dans laquelle $R^1$ représente un radial alcoyle à chaîne droite ou ramifié ayant de 1 à 20 atomes de carbone
$R^2$ représente un radical n-butyle
x un nombre allant de 2 à 50 et
y un nombre allant de 0 à 10,
que l'on obtient, en ce que l'on fait réagir un polyglycoléther de formule II

$$R^1O-(CH_2CH_2O)_x(CH_2\overset{\displaystyle CH_3}{\overset{|}{C}}HO)yH \qquad (II)$$

dans laquelle $R^1$, x et y ont les significations indiquées ci-dessus,
avec un halogénure organique de formule (III),

$R^2$-Hal

dans laquelle $R^2$ a la signification indiquée ci-dessus et Hal représente un atome de chlore ou de brome,
en présence d'hydroxyde de métal alcalin solide de 80 à 100 % en poids, se présentant sous forme de particules, dans un rapport molaire de l'halogénure organique (III) au polyglycoléther (II) de 1,5:1 à 2,0:1 et dans un rapport molaire de l'hydroxyde de métal alcalin au polyglycoléther (II) également allant de 1,5:1 à 2,0:1 à des températures de 60 à 140 °C, en tant qu'additifs qui font baisser la mousse dans des agents de nettoyage faiblement moussants.